# EUROPEAN PATENT SPECIFICATION

(11) **EP 4 014 020 B1**
(45) Date of publication and mention of the grant of the patent: **06.11.2024**
(21) Application number: 20851544.5
(22) Date of filing: 13.08.2020
(51) Int. Cl.: G01M 9/00, F02D 17/00, G01P 5/16, F03D 17/00, F03D 13/30

(54) **AIRFOIL PERFORMANCE MONITOR**
MONITOR ZUR ÜBERWACHUNG DER TRAGFLÜGELLEISTUNG
MONITEUR DE PERFORMANCES DE PROFIL AÉRODYNAMIQUE

(30) Priority: 15.08.2019 US 201962887418 P
(43) Date of publication of application: 22.06.2022
(73) Proprietor: Marinvent Corporation, St-Bruno, Quebec J3V 2A5 (CA)
(72) Inventor: MARIS, John, Québec H9W 4J5 (CA); HICKS, William Reeve, Kailua, Hawaii 96734 (US)
(74) Representative: Wörz, Volker Alfred
(86) International application number: PCT/IB2020/057653
(87) International publication number: WO 2021/028874

(56) References cited:
- WO-A1-2018/149533
- KR-A- 20160 087 623
- US-A- 2 431 241
- US-A- 2 431 241
- US-A1- 2010 101 328
- US-B2- 7 896 614
- US-B2- 8 514 103
- US-B2- 8 514 103

## Description

### CROSS-REFERENCE TO RELATED APPLICATIONS

The present application claims priority to and all the benefits of U.S. Provisional Patent Application No. 62/887,418 filed on August 15, 2019.

### BACKGROUND OF THE INVENTION

### 1. Field of the Invention

The present disclosure relates to an airfoil performance monitor, and more specifically, such a monitor that senses conditions at the working surface of an airfoil.

### 2. Description of the Related Art

Aircraft are equipped with various sensors for providing real-time feedback of various operator controls. For example, sensors may be surface mounted to a wing of an aircraft in order to measure and provide data indicative of lift and drag across and over an airfoil of the wing. Measurements taken by sensors may account for contamination effects in any environmental conditions that the aircraft, and specifically the wing, may be experiencing. The sensors disposed on the wing of the aircraft allow actionable decisions to be made to improve performance of the airfoil of the wing. These airfoil performance sensors are designed and certified for aircraft wings to operate as a critical, life-saving sensor for icing impact quantification.

In addition to fixed wing aircraft, airfoils are used in a number of other applications for various purposes. For example, the blade of a wind turbine is essentially an airfoil. Air flowing past the airfoil causes a lift force on that blade which in turn causes the wind turbine to rotate, thereby ultimately driving a generator from which electrical power is derived. Currently, the overall performance of a wind turbine is typically monitored using a "power curve" which is a measure of the electrical power produced by the turbine and is often related to environmental sensors such as the local wind speed. This method provides a gross overview of the performance of the entire wind turbine, but it yields little insight into the specific cause of any performance losses, which might arise from aerodynamic, mechanical, electrical, or control systems issues, among others. Furthermore, the power curve yields no direct information about the possible aerodynamic degradation being experienced by one or more of the rotor blades individually. Such degradation can arise from numerous causes, including but not limited to manufacturing defects, leading-edge erosion (caused by sand, water or debris), acute damage (caused by hail, lightning or bird strike), or contamination by heavy rain, sleet, or accumulated ice deposits. Icing is a particularly serious problem, because its aerodynamic effects depend on so many factors (e.g. ice thickness, chordwise extent, vertical extent, spanwise extent, roughness, etc.), that they are essentially impossible to predict. The current state of the art includes the use of icing detectors, and even some icing thickness sensors, but none of these can predict the effect of the measured ice on the performance of the airfoils. Similar limitations apply to theoretical efforts to determine the impact of icing, such as Computational Fluid Dynamics techniques. As a result, the common approach to operation in icing conditions is to shut down the wind turbine, which has serious operational and financial consequences, because entire wind farms can be simultaneously impacted and shut down due to severe icing conditions. All of these factors can have an immediately deleterious effect on an individual wind turbine's performance, but they can also lead to reduced longevity, significantly increased maintenance costs, and higher operating costs for an entire wind farm because these problems are extremely difficult to isolate and address with the prior art. Some examples of prior art solutions are available in the following documents : US 2010/101328 A1, US 8 514 103 B2 and US 2 431 241 A.

### SUMMARY OF THE INVENTION

The present invention is directed toward an airfoil performance monitor that is designed to overcome the deficiencies in the related art. Thus, one embodiment of the airfoil performance monitor of the present invention includes a housing that may be mounted on a low-pressure face of an airfoil. The housing includes at least one pitot pressure orifice used to determine the total pressure at the airfoil performance monitor and at least one static pressure orifice used to determine the static pressure at the airfoil performance monitor. The airfoil performance monitor includes at least one airspeed-dependent sensor that senses the total pressure at the airfoil performance monitor via the pitot pressure orifice and generates a digital airflow signal indicative of the dynamic pressure at the airfoil performance monitor. A controller derives a turbulence intensity ratio by processing and filtering turbulence values calculated from the digital airflow signal.

The present invention is also directed toward an airfoil performance monitor system that includes at least one airspeed-dependent sensor disposed on a low-pressure face of an airfoil. The air foil performance monitor system includes at least one pitot pressure sensing orifice used to determine the total pressure at the airfoil performance monitor and at least one static pressure orifice disposed on a low-pressure face of an airfoil used to determine the static pressure at the airfoil performance monitor. At least one airspeed-dependent sensor measures the total pressure at the pitot pressure orifice and generates a digital airflow signal indicative of the dynamic pressure measured at the at least one pitot pressure orifice.

The signal generated from an airspeed-dependent sensor is processed into a digital airflow signal indicative of turbulence of the airflow. Additionally, the airfoil performance monitor system of the present invention includes one or more inertial sensors that measure acceleration, or other motions, in up to three orientations in relation to the mounting point. A controller derives a turbulence intensity by normalizing the measured turbulence intensity using the steady-state airflow signal, thereby generating a non-dimensional turbulence intensity ratio of the turbulent to steady state signal components. The controller also filters the signals from the airflow- dependent sensors using the frequencies obtained from the inertial sensors to eliminate the unwanted blade vibration effects on the turbulence intensity calculations.

A controller uses the processed turbulence intensity signal to monitor the aerodynamic performance of the airfoil, and to prevent a pre-set turbulence intensity threshold being exceeded which would be indicative of an airfoil "stall" as discussed below.

In addition, the present invention is directed toward an airfoil performance monitor system for use with a wind turbine. The system includes a housing mounted on a low-pressure face of an airfoil. The housing defines at least one pitot and one static pressure orifice. At least one airspeed-dependent sensor is disposed on a low-pressure face of an airfoil. The signal generated from the airspeed-dependent sensor as a result of airflow measured via the pitot-static orifices is processed into a digital signal indicative of the turbulence of the airflow. One or more inertial sensors measure a blade pitch angle, and motion in up to three orientations from their mounting location based on mechanical motion of the airfoil transmitted mechanically to the housing. A controller derives a turbulence intensity ratio by filtering turbulence values with the acceleration in response to the blade pitch angle and the frequency and amplitude of the acceleration from the one or more inertial sensors and relating the filtered airflow turbulence signal to the steady state airflow signal, and generates data upon which commands are based to adjust the blade pitch angle using a rotor control system.

The present invention is also directed toward a wind turbine that includes one or more blades that turn a shaft, a generator, which may be connected via a gearbox to the shaft, that converts and stores energy, and a housing mounted on a low-pressure face of an airfoil. The housing defines at least one pitot pressure orifice used to measure the total pressure at the airfoil performance monitor and at least one static pressure orifice used to measure the static pressure at the airfoil performance monitor. At least one airspeed-dependent sensor is in fluid communication with the at least one pitot pressure orifice that converts airflow measured via the pitot orifice and generates a digital airflow signal indicative of turbulence of the airflow. One or more inertial sensors are disposed on a low pressure face of an airfoil of one of the blades that may measure a blade pitch angle, and acceleration, which is frequency and amplitude data measured in up to three orientations from the mounted location on one or more of the blades. A controller derives a turbulence intensity ratio by relating the filtered turbulence signal to the steady state airflow signal and generates commands to adjust the blade pitch angle using a rotor control system.

Other objects, features and advantages of the present invention will be readily appreciated as the same becomes better understood after reading the subsequent description taken in connection with the accompanying drawings.

### BRIEF DESCRIPTION OF THE DRAWINGS

Figure 1 is a perspective view of a wind farm with a plurality of wind turbines;
Figure 2 is a side view of a wind turbine and rotor assembly;
Figure 2A is an enlarged cross-sectional side view depicting an airfoil defined by a turbine blade;
Figure 3A is a schematic view of a rotor for a wind turbine with a blade having a mast-mounted sensor assembly;
Figure 3B is a schematic view of the mast-mounted sensor assembly;
Figure 4 is perspective view of a mounting interface for the mast-mounted sensor assembly;
Figure 5 is a cross-sectional view of one embodiment of the mast-mounted sensor assembly of the present invention;
Figure 6 is a perspective view of an additional embodiment of a mast-mounted sensor assembly;
Figure 7 is a functional block diagram for the mast-mounted sensor assembly;
Figure 8 is a flow chart depicting operation of the mast-mounted sensor assembly; and
Figure 9 is a flow chart depicting operation of a heater for the mast-mounted sensor assembly.

### DETAILED DESCRIPTION OF THE INVENTION

As described in greater detail below, the present invention is directed toward an airfoil performance monitor. As a means of illustrating the inventive features of the present invention, the performance monitor is described with respect to use in connection with wind turbines. However, those having ordinary skill in the art will appreciate from the description that follows that this is only one representative example of how the performance monitor of the present invention may be employed to monitor and track environmental and operational performance conditions at an airfoil used in any number of applications.

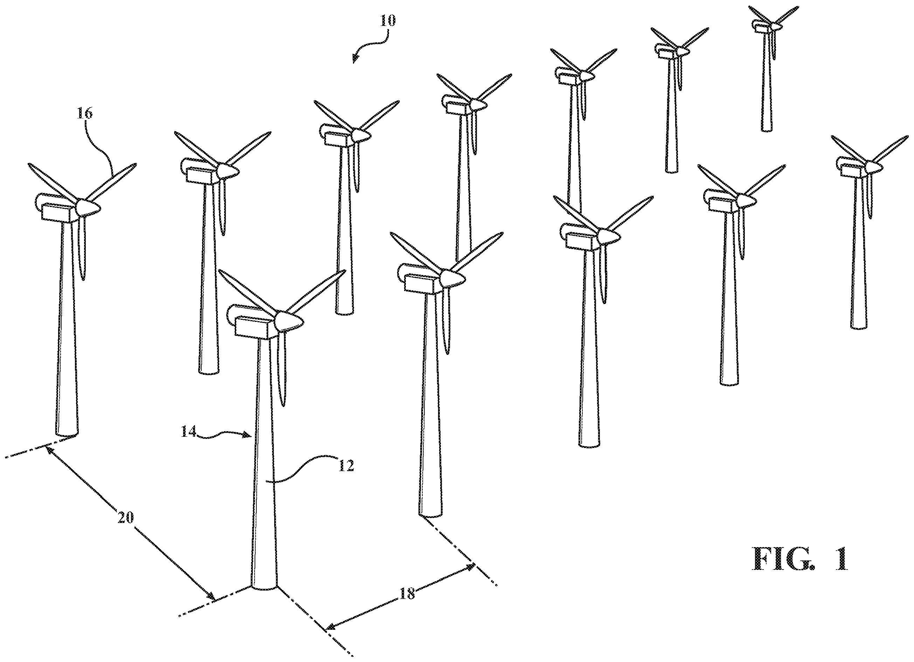

With this representative, environmental application in mind, Figure 1 depicts one representative perspective view of a wind farm 10 having a plurality of wind turbines 12. The wind turbines 12 are arranged in an array 14. The wind turbines 12 convert kinetic energy from wind into electrical energy, by way of an electro-mechanical system. As will be described in more detail below, wind flows across each wind turbine 12 within the array 14, which causes blades 16 of each of the wind turbines 12 to turn. Turning the blades 16 transfers kinetic energy from wind into the mechanical power, which can be used to rotate a generator that produces electricity that can be stored or transmitted to an electrical grid as electrical energy from the wind turbine 12. Therefore, each of the plurality of wind turbines 12 may be disposed in an array 14 arranged based on wind patterns to enhance and maximize energy conversion within the wind turbines 12.

As shown, the array 14 of plurality of wind turbines 12 is oriented such that each of the wind turbines 12 has adequate spacing to allow the blades 16 to turn, while maximizing an amount of individual wind turbines 12 within the array 14. Stated differently, a distance 18 between each of the turbines 12 may be set to maximize a number of wind turbines 12 disposed within the array 14 of the plurality of wind turbines 12. Additionally, in order to cause the blades 16 of the wind turbines 12 to rotate, the wind turbines 12 planes of rotation need to be oriented in a direction substantially perpendicular to the direction of the wind. While described as substantially perpendicular, the orientation of each of the wind turbines 12 may be within a range of angles dependent on the direction and patterns of wind that flows through the wind farm 10 to allow the blades 16 to turn with optimal efficiency.

The array 14 of wind turbines 12 may be arranged in a shape designed to optimize an amount of wind turbines 12 in the plurality of wind turbines 12 disposed within the array 14 of the wind farm 10. The shape of the array 14 of wind turbines 12 disposed and arranged on the wind farm 10 may be based, at least in part, on the distance 18 needed between each of the other wind turbines 12 to allow the blades 16 full rotation, as described above, and a pattern and direction of wind as it passes through the wind farm 10. Additionally, a fore and aft distance 20 between each turbine 12 within the plurality of turbines 12 may impact the shape and orientation of the array 14 of the plurality of wind turbines 12. For example, minimizing the fore and aft distance 20, as well as the distance 18 between each of the wind turbines 12 may maximize a number of wind turbines 12 disposed within the array 14.

Likewise, an optimized fore and aft distance 20 and distance 18 between each of the wind turbines 12 may impact the shape of the array 14 to maximize efficiency of the wind farm 10. Optimizing the fore and aft distance 20 between each of the wind turbines 12 may also consider a strength, direction and pattern of wind across the wind farm 10. Stated differently, the direction and pattern of wind blowing across the array 14 of wind turbines 12 may further provided data indicative of an optimal fore and aft distance 20 between each of the wind turbines 12 within the array 14 to maximize an efficiency of each of the wind turbines 12 in the array 14.

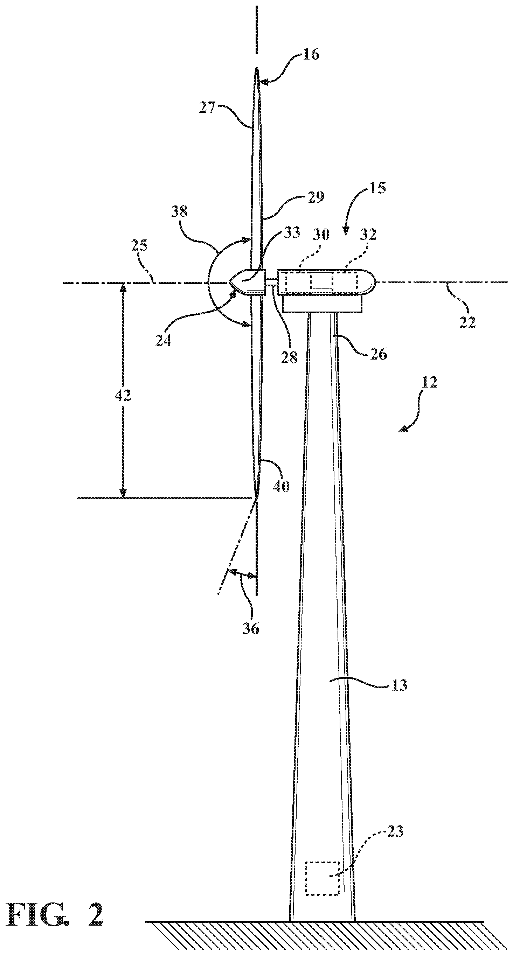

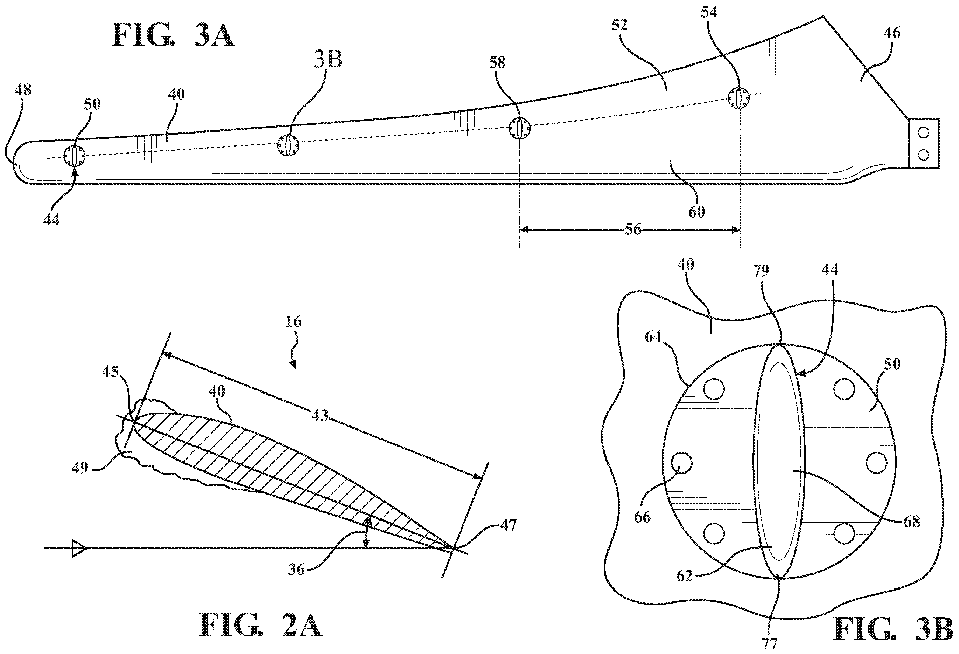

Referring to Figure 2, a side view of an individual wind turbine 12 is depicted. The wind turbine 12 may include a generally vertical tower 13 that supports a housing, sometimes referred to as a nacelle, 15 which, in turn, supports internal components of the turbine, such as a generator 32, gearbox 30, associated shafts, yaw drive, yaw motor and the like. The housing 15 includes a rotor 24 that comprises a hub 33 to which are mounted wind turbine blades 16. The wind turbine 12 depicted in Figure 2 is shown having individual blades 16. Each turbine 12 may include a plurality of blades 16 based on an optimal number of blades 16 to maximize efficiency of energy generation by the wind turbine 12. The number of blades 16 arranged on the wind turbines 12 may also be determined based on the direction and pattern of wind blowing across the wind farm 10 to maximize efficiency of energy generation by the wind turbines 12 across the array 14 of wind turbines 12. The blades 16 are arranged on the wind turbine 12 such that, in response to wind flowing through the wind turbine 12, the blades 16 rotate around a horizontal axis 22 that intersects a centerline 25 of the rotor 24 of the wind turbine 12.

Specifically, wind flowing across each blade 16 is separated such that the blades 16 define high and low pressure sides 27, 29. The blades 16 turn in response to the pressure difference between the high and low pressure sides 27, 29. For example, the pressure difference from the high pressure side 27 to the low pressure side 29 provides a force necessary to accelerate the blades 16 on the rotor 24 to turn a shaft 28 that converts a mechanical torque from the wind energy into electrical energy by a generator 32, as will be described in more detail below. The rotor 24 may be controlled by a rotor control system 23 that is adapted to adjust a position and orientation of the blades 16 relative to the centerline 25 of the rotor 24. For example, the rotor control system 23 may adjust a pitch angle 36 of the blades 16 to optimize performance of the wind turbine 12.

The rotor 24 rotates the shaft 28 disposed within the housing 15 of the wind turbine 12. The shaft 28 may transfer torque from the rotor 24 through a gearbox 30 connected to the generator 32 or may be directly connected to the generator 32. The generator 32 converts torque into electrical energy, which can be stored for later use or transmitted to an electrical grid. Therefore, as wind flows across the wind turbine 12 and causes the blades 16 to rotate, as described, the rotor 24 rotates the shaft 28 to transfer power to the generator 32, which produces electrical energy for use. The more revolutions of the shaft 28 by the blades 16 turning the rotor 24, the more electrical energy that is produced by the generator 32. Stated differently, performance of the blades 16 dictate an amount of electrical energy converted by the generator 32, and providing adjustment to an orientation 34 of the blades 16 and a pitch angle 36 of each blade 16 may further aid to improve performance of each of the blades 16. Additionally, in at least one other embodiment, a coning angle 38 between each blade 16 may be based on optimal parameters from the strength, direction and pattern of wind blowing across the wind turbine 12.

The pitch angle 36 of each blade 16 aids the blade 16 in turning the rotor 24. The inventors have found that monitoring the pitch angle 36 of each blade 16 and providing adjustments to maximize efficiency is advantageous. For example, as wind flows past the wind turbine 12 and across the blades 16 of the wind turbine 12, the pitch angle 36 of the blade 16 forces air to travel around an airfoil 40 of the blade 16, as previously described. The movement of air around the airfoil 40 of the blade 16 propels the blade 16 around the rotor 24. Therefore, the pitch angle 36 of the blade 16 aids in determining efficiency and production of mechanical power transfer through the rotor 24 and shaft 28 into electrical energy converted by the generator 32.

Each blade 16 includes a span length 42 as well as a chord length 43. The chord length 43 is a length of a cross-section of the blade 16, as measured from the leading edge 45 to the trailing edge 47 of the blade 16 cross-section. As wind flows across the blades, the resulting forces on the blade cause a torque to be applied to the rotor 24 which spins the shaft 28 connected to the generator. The wind turbine control system adjusts the pitch angle 36 of the blades 16 to optimize the performance of the wind turbine for the extant wind conditions, while keeping the wind turbine within its design operating limits (e.g. RPM, structural loads, etc.). As will be discussed in more detail below, the airfoil performance monitor and system of the present invention disposed on the blade 16 aids the control system in improving the overall performance of the wind turbine 12 under a broad range of operating conditions, including the presence of airfoil degradations such as those caused by leading edge erosion or icing, generally indicated at 49 in Fig. 2A.

Figures 3A and 3B depict a perspective view of the blade 16 detached from the rotor 24 and wind turbine 12. Figure 3A depicts one operative embodiment where the blade 16 has four airfoil performance monitors 44 disposed between the blade root and blade tip 46, 48, and wherein the blade 16 attaches to the rotor 24 at the root 46. The blade 16 attaches to the rotor 24 at the root 46 using one or more fasteners (not shown). Alternatively, the blade 16 may attach to the rotor 24 at the root 46 using any known mechanical fastening technique. The airfoil performance monitor 44 may also be referred to as an airfoil performance monitor system 44. As will be described in more detail below, the airfoil performance monitor 44 may be mounted on a low-pressure face 52 of the airfoil 40. Securing the airfoil performance monitor 44 on a low-pressure face 52 of the airfoil 40 allows the airfoil performance monitor 44 to provide data indicative of a performance of the blade 16 of the wind turbine 12.

As shown, the airfoil performance monitor 44 may be spaced along the blade 16 between the blade root and blade tip 46, 48. The airfoil performance monitor 44 may be secured to the blade 16 at distinct, predetermined positions 54, or may be spaced according to a set, predetermined pattern (not shown). For example, depending on the shape and design of the wind turbine blade 16 or on wind patterns, direction and strength, as well as a design of the array 14 of wind turbines 12, the airfoil performance monitors 44 may be secured at the predetermined position 54 indicative of providing the airfoil performance monitor 44 a data set, that may be utilized to optimize the performance of the blade 16 and wind turbine 12. The predetermined position 54 of the airfoil performance monitor 44 may be determined by computational fluid dynamics analysis and/or by experimentation during initial setup to ensure the predetermined position 54 provides the best available data to the airfoil performance monitor 44 to optimize a performance of the wind turbine 12.

Alternatively, the airfoil performance monitor 44 may be evenly spaced between the root and tip 46, 48 of the blade 16. For example, the airfoil performance monitors 44 may define an equal distance 56 between centers 58 of each of the airfoil performance monitors 44 disposed on the blade 16. Providing equal distance 56 between centers 58 of each of the airfoil performance monitors 44 allows the airfoil performance monitor 44 to collect data in evenly distributed sections 60 across the blade 16. Collecting data in distributed sections 60 provides performance information of the airfoil 40 of the blade 16 as wind acts to rotate the blades 16 about the rotor 24. This data indicative of performance of the blade 16 at each section 60 allows the airfoil performance monitor 44 to provide accurate analysis of the interaction between the blade 16 and wind acting across the blade 16, and likewise aid to optimize performance and efficiency of each individual blade 16 on the wind turbine 12 for greater production of electrical energy from the wind farm 10.

As noted above, the embodiment shown in Figure 3A includes four airfoil performance monitors 44 secured to the blade 16. However, this is merely exemplary. The blade 16 may employ any number of airfoil performance monitors 44 secured between the root and tip 46, 48 of the blade 16. The number of airfoil performance monitors 44 secured to the blade 16 may be dependent on the shape and design of the wind turbine blade 16, and/or the direction, pattern and strength of wind that interacts with the blade 16. The number of airfoil performance monitors 44 may also be dependent on an amount of data necessary to calculate and optimize a performance of the blade 16 and wind turbine 12. For example, a single airfoil performance monitor 44 may provide enough data and processing power to effectively calculate and adjust a performance of the blade 16 such that production of wind energy is optimized. Likewise, multiple airfoil performance monitors 44, as shown, may provide additional data to increase a sensitivity of the overall performance of the airfoil performance monitor system 44.

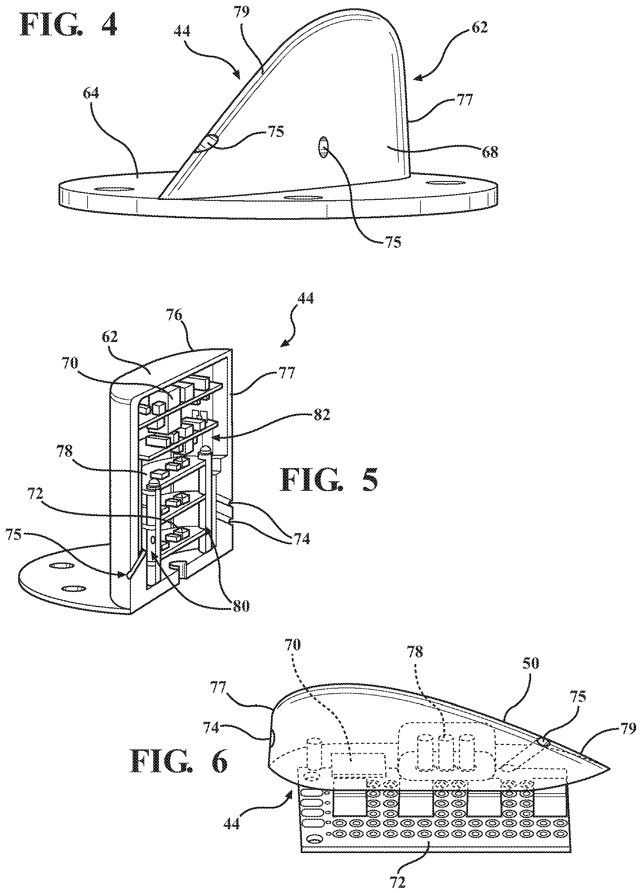

Referring to Figure 3B, a schematic view of one embodiment of the airfoil performance monitor 44 is depicted. As shown in Figure 4, the airfoil performance monitor 44 includes a housing or mast 50. The mast 50 defines a fin portion 62 and a base portion 64. The fin portion 62 extends in a direction perpendicular from the airfoil 40 from the base portion 64. The base portion 64 attaches to the airfoil using mechanical fasteners (not shown) extending through a plurality of holes 66 defined through the base portion 64. However, those having ordinary skill in the art will appreciate that the base portion 64 may be mounted to the airfoil using any conventional fastening mechanism. The fin portion 62 attaches to the base portion 64 through welding, forming, adhesion or any other known mechanical joining technique such that the fin portion 62 is sealed to the base portion 64. Alternatively, the fin and base portions may be formed as an integral, one-piece component. The base portion 64 may be substantially solid and formed to provide as much surface area contact between the base portion 64 and the airfoil 40 to ensure greater stability of the mast 50 on the blade 16. The fin portion 62 is formed as substantially hollow, and may be of a streamlined airfoil shape such that air flows on each side 68 of the fin portion 62, as shown in Figure 3B Alternatively, the fin may be manufactured as an integral part of the wind turbine blade 16, in which case the fin portion 62 would be integrated into the wind turbine blade 16 foregoing the need for the base portion 64 attachment.

Figure 4 depicts a perspective view of the fin housing or mast 50 of an airfoil performance monitor 44 that includes fin 62 and base portions 64. The fin portion 62 is designed to house components of the airfoil performance monitor 44. For example, Figure 5 depicts a schematic, perspective, cross-sectional view of one embodiment of the airfoil performance monitor 44 as a single combined unit that houses all of the necessary electronics in the mast. Specifically, Figure 5 depicts an interior 76 of the combined airfoil performance monitor 44. And as will be described in more detail below with respect to Figure 5, the fin portion 62 is designed to house at least one or more inertial sensors 70, such as accelerometers, one or more airspeed-dependent sensors 78, a controller 72 and associated electronics to provide data indicative of a performance and efficiency of the airfoil 40 for the blade 16 of the wind turbine 12.

In one embodiment shown in Figure 5, the fin portion 62 defines at least one pitot pressure orifice 74 and at least one static pressure orifice 75. However, the airfoil performance monitor 44 of the present invention may include a plurality of pitot orifices 74 and a plurality of static pressure orifice 75. For example, in the embodiment shown in Figure 5, the pitot pressure orifice 74 is disposed on the front or leading edge 77 of the fin portion 62 and the static pressure orifice 75 is located on the trailing edge 79 of the fin portion 62. On the other hand, and as shown in Figure 4, the airfoil performance monitor 44 may include a plurality of static pressure orifices 75. One of the static pressure orifices may be located on the side 68 of the fin portion 62 and another may be located on the trailing edge 79 of the fin portion 62. These embodiments are merely exemplary, and the amount and location of pitot and static orifices 74, 75 may vary between depending, for example, on airflow strength, pattern and direction at a location of the mast 50. The size and shape of the pitot and static orifices 74, 75 may be adjusted to adjust the exposure of the airflow dependent sensor and tune the sensitivity necessary to calculate a performance and efficiency of the blade 16 of the wind turbine 12. The pitot and static pressure orifices 74, 75 may also be disposed at a 45 degree angle relative to a horizontal plane passing through the fin portion 62 to facilitate drainage of any liquid, such as water from rain or melting snow or ice, from the mast 50.

Each of the pitot pressure orifices 74 is in fluid communication with at least one airspeed-dependent sensor 78. The static pressure orifices 75 may also be in fluid communication with at least one airspeed-dependent sensor 78 as well. Alternatively, the static pressure orifice 75 may be in fluid communication with the interior 76 of the mast 50 such that the pressure of the interior of the mast 50 reflects the external static pressure. In this configuration, the static pressure orifices are simply open to the interior 76 of the mast 50 to equalize the internal and static external pressure. The pitot orifice 74 and its associated airspeed-dependent sensor 78 is used to measure total pressure that impinges upon the pitot orifice 74. The static pressure orifice 75 is used to measure the static pressure that impinges on the static orifice 75. As will be discussed in greater detail below, the static pressure measured at the static pressure orifice 75 is subtracted from the total pressure measured at the pitot pressure orifice 74 to arrive at the dynamic pressure.

With continuing reference to Figure 5, one or more inertial sensors 70, and one or more airspeed-dependent sensors 78 are shown stacked above the controller 72 within the interior 76 of the fin portion 62 of the mast 50. In the embodiment shown in Figure 5, the inertial sensors 70 may be accelerometers. However, those having ordinary skill in the art will appreciate that any type of inertial sensor suitable for the purposes disclosed herein are acceptable. Stacking the inertial sensors 70, the airspeed-dependent sensors 78, and the controller 72 allows the mast 50 to efficiently package electronics necessary to optimize a performance and efficiency of the wind turbine 12.

The inertial sensors in the form of accelerometers 70 may be disposed above the airspeed-dependent sensors 78, which are located above the controller 72 in the embodiment illustrated in the figures. As noted above, however, those having ordinary skill in the art will appreciate that these components may be arranged relative to each other in any number of configurations without departing from the scope of the present invention. This arrangement is merely exemplary. In at least one other embodiment, the airspeed-dependent sensors 78 may be disposed above the accelerometers 70, which are located above the controller 72. Likewise, the controller 72 may be stacked above both the accelerometers 70 and the airspeed-dependent sensors 78. The combination and orientation of the accelerometers 70, airspeed-dependent sensors 78, and controller 72 may be optimized by sensor type, efficiency and performance requirements. For example, the airspeed-dependent sensors 78 may be disposed in an orientation and stacked within the interior 76 of the mast 50 such that airflow measured via pitot orifices 74 in the mast 50 provide airspeed-dependent data accurately sensed by the airspeed-dependent sensors 78. In the same way, the accelerometers 70 may be disposed in an orientation and stacked within the interior 76 of the mast 50 such that an angle, or pitch of the airfoil performance monitor 44 provides acceleration data of the blade 16 accurately sensed by the accelerometers 70. Similarly, the controller 72 may be disposed and stacked within the interior 76 of the mast 50 in an orientation that provides efficient data processing and transfer.

The airspeed-dependent sensors 78 may be pressure sensors. The pressure sensors used as airspeed-dependent sensors 78 may be sensors with a high frequency response, such as, but not limited to, piezo-resistive, thin film sensors. Any other type of pressure sensor, for example sealed and unsealed, that is adapted to measure differential airflow pressure or velocity may also be contemplated by one having ordinary skill in the art. Likewise, the inertial sensors, such as accelerometers 70, may be sensors that measure vibration of the blade 16. The accelerometers 70 may be either high or low impedance piezoelectric sensors. As noted above, he accelerometers 70 may be substituted with, or supplemented by, alternative inertial measurement sensors to also include 6-axis or 3-axis gyroscopes adapted to measure vibration from the blade 16 through the mast 50. Operation of the inertial sensors 70, airspeed-dependent sensors 78 and controller 72 will be explained in more detail with reference to the other Figures.

The airfoil performance monitor illustrated in Figure 5 also includes heater elements 80. Heater elements 80 may be supported within the interior 76 of the mast 50 on either side of the accelerometers 70, the airspeed-dependent sensors 78 and the controller 72. While shown and described as being disposed on either side of the accelerometers 70, the airspeed-dependent sensors 78 and the controller 72, the heater elements 80 may be a single heater element 80 disposed on a single side from the accelerometers 70, the airspeed-dependent sensors 78 and the controller 72. The heater elements 80 may be any element adapted to radiate heat into the mast 50, such as, but not limited to, a resistive heating element 80 that produces heat in response to electrical current. The heater elements 80 are configured to keep the mast 50, the accelerometers 70, the airspeed-dependent sensors 78, and controller 72 from accumulating ice on the mast 50 and obstructing the pitot and static orifices 74, 75 during adverse weather conditions.

The mast 50 may also include a power supply 82 disposed within the interior 76 of the mast 50. The power supply 82 may be on a single side of the interior 76 of the mast 50 or disposed on either side of the interior 76 of the mast 50, depending on an amount of power needed. The power supply 82 is adapted to provide electrical power to the accelerometers 70, the airspeed-dependent sensors 78 and the controller 72 depending on required power use of the accelerometers 70, airspeed-dependent sensors 78, the controller 72 and the heaters 80. Power provided by the power supply 82 may be optimized based on a type of accelerometer 72, airspeed-dependent sensors 78, heaters 80 and processing requirements of the controller 72.

Figure 6 depicts another embodiment of the airfoil performance monitor 44 wherein the controller 72 is separated from the accelerometers 70 and airspeed-dependent sensors 78. By separating the controller 72 from the accelerometers 70 and airspeed-dependent sensors 78, a smaller footprint for the mast 50 may be achieved. Additionally, with the controller 72 separated from the accelerometers 70 and airspeed-dependent sensors 78, the mast 50 has greater mounting flexibility on the blade 16 of the wind turbine 12 based on this smaller footprint. Specifically, in the embodiment shown in Figure 6, the mast 50 may include the pitot and static orifices 74, 75, the accelerometers 70 and the airspeed-dependent sensors 78. The controller 72 may be disposed remote from the mast 50 shown in Figure 6. As shown, the controller 72 is disposed beneath the mast 50. This is merely exemplary, and indicative of the controller 72 being remote from the mast 50. Again, Figure 6 depicts a further embodiment of the airfoil performance monitor 44 that allows for a mast 50 with a smaller footprint, providing ease of installation for the mast 50 on the blade 16.

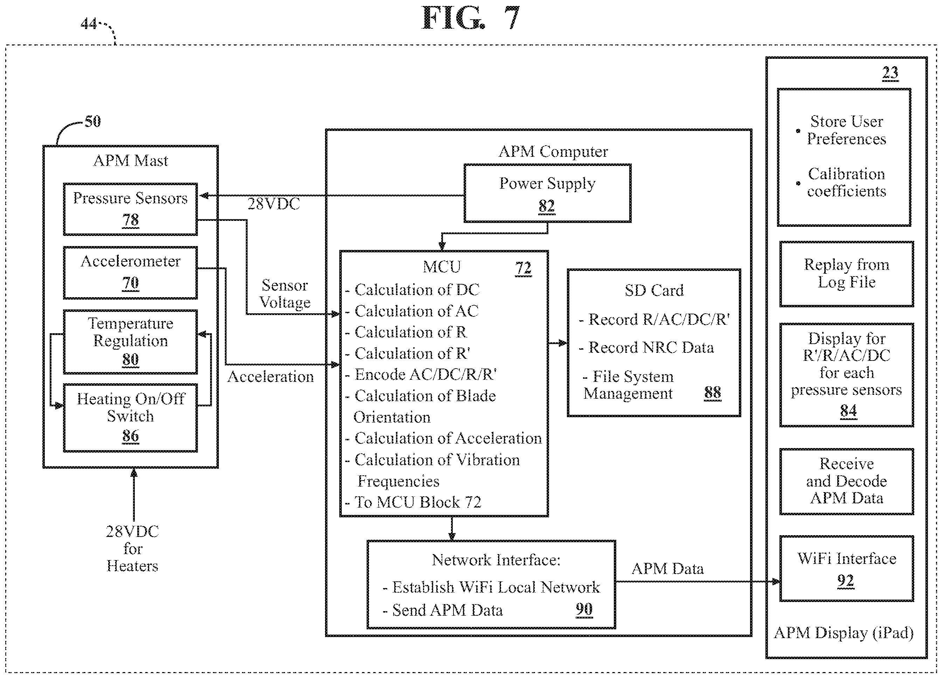

Referring to Figure 7, a functional block diagram of operation of the airfoil performance monitor 44 is depicted. The functional block diagram shown in Figure 7 depicts interaction between the accelerometers 70, airspeed-dependent sensors 78 disposed within the mast 50, the controller 72, and a display 84. As can be seen in the embodiment depicted in Figure 7, the mast 50 includes the airspeed-dependent sensors 78, the accelerometers 70, and the heater elements 80. As will be described in more detail with reference to the other Figures, the heater elements 80 may be operated as a closed loop with a switch 86 such that the switch 86 is used to regulate heat from the heater elements 80. As shown, for example, the heater elements 80 receive approximately 28 volts of direct current to operate. This is merely exemplary, however, and the required volts to operate the heater elements 80 may be more or less than 28 volts depending on the type and arrangement of the heater elements 80.

Figure 7 also depicts the accelerometers 70 and airspeed-dependent sensors 78 in communication with the controller 72. As shown, the airspeed-dependent sensors 78 send sensor voltage data produced by, and indicative of an airflow pressure and velocity measured via the pitot pressure orifice 74 and possibly the static pressure orifices 75. The inertial sensors 70, such as accelerometers, provide acceleration data indicative of the mechanical motion of the blade 16 and can be used to infer the pitch angle 36 of the blade 16 of the wind turbine 12. Both the acceleration data from the inertial sensors 70 and the sensor voltage data from airspeed-dependent sensors 78 are used by the controller 72 to calculate a turbulence value of airflow across the blade 12. Specifically, the acceleration data, as will be described in more detail below, from the inertial sensors 70 is used to filter vibratory noise detected by the airfoil performance monitor 44, and the sensor voltage data from the airspeed-dependent sensors 78 is used to calculate the dynamic pressure at the blade 16 of the wind turbine 12. Again, as can be seen in Figure 7, the power supply 82 connects to the sensors in the mast 50, and specifically the airspeed-dependent sensors 78 to provide power to the mast 50. As shown, the power supply 82 supplies 28 volts of direct current to the airspeed-dependent sensors 78. The airspeed-dependent sensors 78 may also be adapted to be powered on any amount of voltage from the power supply 82.

The controller 72 is also in communication with the inertial sensors 70, airspeed-dependent sensors 78 and power supply 82. The power supply 82 is adapted to supply power to the controller 72 to allow the controller 72 sufficient processing power to compute a digital airflow signal. Ultimately, the controller 72 is configured to calculate a filtered turbulence airflow signal. The turbulence airflow signal is used to calculate an airflow, turbulence intensity ratio, as will be described in greater detail with reference to the other figures. Specifically, the airspeed-dependent sensors 78 provide data indicative of the total pressure at the blade 16 as measured at the pitot orifices 74 of the airfoil performance monitor 44. The static pressure orifices 75 are used to measure the static pressure at the airfoil performance monitor 44. The measured static pressure is subtracted from the total pressure to arrive at the dynamic pressure at the airfoil performance monitor 44. The inertial sensors 70 provide data indicative of vibration frequency and amplitude of vibrations on the blade 16 through the mast 50 to the controller 72 to calculate the turbulence intensity ratio. Additionally, data from the inertial sensors 70 is corrected for an orientation of the blade 16 by a blade incidence angle (not shown), if necessary, such that a characteristic, vibration frequency and amplitude are extracted from the filtered turbulence signal using the controller 72. To account for the blade pitch angle 36, a gain is set in the controller 72 since the blade pitch angle 36 may be set at an arbitrary pitch angle independent of the local airspeed.

The vibration frequency and amplitude data from the inertial sensors 70 is used to filter the digital airflow signal derived from data indicative of turbulent airflow from the airspeed-dependent sensors 78 to eliminate noise caused by vibration of the mast 50 on the blade 16 of the wind turbine 12. Specifically, as air impinges on the pitot and static orifices 74, 75 the airspeed-dependent sensors 78 are excited by an increase in turbulence as an angle-of-attack of the blade 16 increases to generate an alternating current (hereinafter "AC") signal being data indicative of turbulent airflow. A change in the blade 16 aerodynamics from contamination, damage, defect, or other airflow modifying cause(s) may also increase the turbulence of the airflow. The airspeed-dependent sensors 78 are excited by this increase in turbulence to generate an AC signal being data indicative of turbulent airflow. In the absence of mechanical vibration, the inertial sensors 70 provide a relatively small or zero oscillatory signal due the lack of mechanical motion of the blade 16, and the AC signal can be determined to be accurately indicative of an increase in turbulence.

Conversely, if mechanical motion, such as vibrations, are induced on the blade 16, the mechanical motion relative to the airflow measured at the pitot and static orifices 74, 75 generates an AC signal falsely indicative of increased turbulence. The inertial sensors 70 are adapted to register, as frequency and amplitude data, mechanical motion during vibratory oscillations in order that the frequency of these spurious vibration-induced turbulence signals can be determined and filtered out from the airflow signal. As described, the controller 72 is configured to identify and filter the frequency and amplitude data indicative of mechanical motion on the blade 16 from the AC signal such that the filtered digital airflow signal can be determined to be accurately indicative of an increase in turbulence. The controller 72 may include a filter that can employ Fast Fourier Transform methods to identify the characteristic frequencies induced by mechanical vibrations. The filters may include notch, band-pass, high-pass, low-pass, low-pass parabolic or any other filter(s) to filter the undesired vibration-induced signals from the digital airflow signal to arrive at a correct measure of the airflow turbulence. More specifically, the controller 72 may apply Fast Fourier methods to the accelerometer signals to determine the fundamental vibratory frequencies of the unwanted noise induced by mechanical vibrations of the airfoil performance monitor 44 at the mast 50. The controller 72 then uses filtering techniques which could include, but are not limited to, one or more of a notch, band-pass, high-pass, low-pass, or low-pass parabolic filters to eliminate the unwanted vibration-induced noise from the desired air turbulence signal. During steady-state conditions, in which airflow measured via the pitot and static orifices 74, 75 is laminar and the blade 16 is not vibrating, both signals provide minimal signals of turbulence or motion, which is indicated by the smooth direct current (hereinafter "DC") component of the digital airflow signal.

The controller 72 normalizes the filtered frequency and amplitude AC signal by dividing by a DC component of the frequency and amplitude data from the airspeed-dependent sensors 78. The controller 72 also normalizes the inputs from the one or more inertial sensors 70, such as accelerometers, into acceleration components parallel to and perpendicular to the plane of rotation of the rotor 24 in response to a blade pitch angle 36. The controller 72 calculates a turbulence intensity ratio R by dividing an alternating airflow component, the AC signal, by a steady-state component, the DC signal. Each airfoil performance monitor 44, therefore, generates a turbulence intensity ratio R at a position of the mast 50 on the blade 16. The controller 72 compares the turbulence intensity ratios R from each of the masts 50 disposed along the blade 16 to a threshold turbulence intensity ratio R', which is specific to the location of each airfoil performance monitor and airspeed-dependent sensor associated with a given pitot pressure orifice, that represents the desired stall warning threshold for the blade section at that location. The wholesale separation of the airflow from the low pressure side 29 of the affected section of the airfoil which leads to a rapid reduction in blade propulsive force accompanied by a rapid increase in blade drag that can have a severe effect on the operation of the wind turbine. The unsteady airflow characteristics that usually accompany a stall may also lead to severe vibrations that can jeopardize the integrity of the wind turbine, and which certainly would impact the wear and tear experienced by the drive components.

A stall may be caused by operation at too high a blade pitch angle 36, or due to environmental factors such as icing, which degrades the airflow over the airfoil leading to a premature stall at an otherwise "safe" blade pitch angle 36. The stall is always accompanied by an increase in the relative turbulence seen on the low-pressure side 29 as the lift on the blade begins to decrease. The stall phenomenon for rotating airfoils is complex. Different spanwise portions of a wind turbine airfoil may be stalled at different times; one blade may be stalled while another is not (for example if ice is shed asymmetrically from different blades); and the stall phenomenon may be cyclic - for example each blade might stall as it rotates past the wind turbine tower. It is exactly these phenomena that the proposed invention addresses.

In the case of the wind turbine 12, stall conditions that reduce the blade 16 lift reduce rotational efficiency as the blade 16 turns around the rotor 24. Stated differently, the term stall refers to the reduction of lift and increased drag created by the collapsing pressure differential between the low pressure side 29 and the high pressure side 27 of the blade 16, due to excessive angle-of-attack of the blade 16, which causes significantly increased turbulence on the low pressure side 29 of the blade 16. In extreme cases, these conditions may cause the blade 16 rotational efficiency to drop below the level required to keep the rotation of the wind turbine self-sustaining. The controller 72 may be further configured to adjust the threshold R' to account for varying circumstances. For example, the controller 72 may use a blade pitch angle 36 measured with the accelerometers 70 to scale the turbulence intensity ratio R to adjust the threshold R' as a function of an angle of the blade 16.

The controller 72 may also be configured to transfer data indicative of the turbulence intensity ratio R through a variety of interfaces. As shown in Figure 7, the controller 72 may communicate with a memory card 88 to transfer the digital airflow signal, including the frequency and amplitude data, the steady-state component, and the turbulence intensity ratio R into a file management system (not shown). The memory card 88 may be removable or secured with the controller 72 to allow the turbulence intensity ratio R to be transferred and used in various control systems of the wind turbine 12 or for data analytic purposes. For example, the controller 72 may communicate the turbulence intensity ratio R as feedback input to the rotor control 23 system to optimize an aerodynamic efficiency of the rotor 24 for the rotor control system 23. Additionally, the controller 72 may communicate the vibration frequency and amplitude data as feedback input to the rotor control system 23 to minimize vibration of the rotor 24 for the rotor control system 23.

The controller 72 may communicate with the rotor control system 23 through a network interface 90. The network interface 90 may be a wireless network interface, a local area network interface, or any other data transmission interface that is configured to receive the turbulence intensity ratio R, the accelerometer frequency and amplitude data, the airflow data and any other data generated by the airfoil performance monitor. As can be seen in Figure 7, the rotor control system 23 includes a corresponding network interface 92 to receive communications from the controller 72. Additionally, the rotor control system 23 may be adapted to store user-defined preferences and calibration coefficients, receive and decode the turbulence intensity ratio R and associated data, and display the turbulence intensity ratio R and associated data for each of the airspeed-dependent sensors 78. The rotor control system 23 may also include a log file to register the turbulence intensity ratio R and associated data.

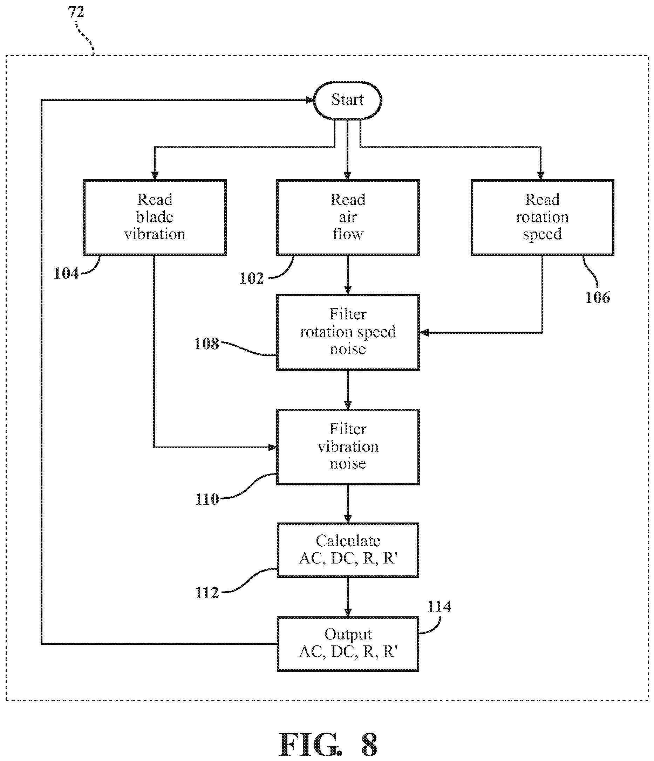

Figure 8 depicts a flow chart indicative of control logic used by the controller 72 to calculate the turbulence intensity ratio R from the airspeed-dependent sensors 78 and the inertial sensors 70. As described, the controller 72 receives airflow data generated by the airspeed-dependent sensors 78 at 102, and blade vibration and rotation speed data at 104, 106 generated by the inertial sensors 70, such as accelerometers or provided from an existing wind turbine 12 control system. The controller 72 filters rotation speed noise, indicated by the rotation speed data at 106 which may be provided from the accelerometers 70, from the digital airflow signal at 108. The controller 72 also filters vibration noise, indicated by the blade vibration noise at 104 measured from the accelerometers 70, from the digital airflow signal at 110. As described above, the filters at 108, 110 may be any type of filter configured to process vibration and rotation speed data, such as, but not limited to, a notch, band-pass, high-pass, low-pass, or low-pass parabolic filters, and may use Fast Fourier methods to determine the fundamental vibratory frequencies from the accelerometer signals.

Filtering the blade vibrations and rotation speed at 108, 110 allows the controller 72 to calculate the turbulence intensity ratio R from the AC and steady-state signals (DC) of the digital airflow signal at 112. The controller 72 calculates the turbulence intensity ratio R at 112 as described. Again, this allows the controller 72 to communicate with the rotor control system 23 to optimize blade pitch for maximum power and efficiency, this optimization may be with the objective to improve the lift/drag ratio of the blade for the prevailing wind conditions. Also, the controller may communicate with the rotor control system 23 to optimize blade pitch with an objective to minimize vibrations that be damaging, or, in the worst case, cause blade-tower collisions. The controller 72 may also use the turbulence intensity ratio R, and accompanying data to identify contamination incidences such as icing and activate the heaters 80 or other deicing systems on the wind turbine airfoil (not shown). Specifically, the controller 72 may use the turbulence intensity ratio R to optimize use of the de-icing system to avoid shutdown of the wind turbine 12. The controller 72 outputs the turbulence intensity ratio R to the rotor control system 23 for optimization of the rotor control system 23 at 114. Additionally, the controller 72 may also output the turbulence intensity ratio R to a display (not shown), as previously described.

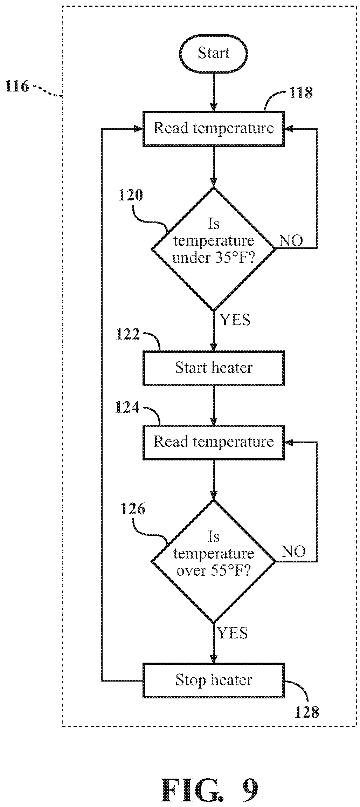

Referring to Figure 9, a flow chart depicting control logic for a de-icing system 116 in communication with the controller 72 is shown. For illustrative purposes, the de-icing system 116 is configured to maintain a temperature of the mast 50 between 35°F and 55°F. At 118, the de-icing system 116 reads a temperature supplied by the controller 72. At 120, the de-icing system decides if the temperature is greater or less than 35°F. If, at 120, the temperature is greater than 35°F, the de-icing system 116 continues to monitor the temperature from the controller at 118. If, at 120, the temperature is less than 35°F, the de-icing system 116 starts the heater elements 80 at 122. At 124, the de-icing system reads the temperature from the controller 72. At 126, the de-icing system determines if the temperature is greater or less than 55°F. If, at 126, the temperature is less than 55°F, the de-icing system 116 continues to monitor the temperature from the controller at 124. If, at 126, the temperature is greater than 55°F, the de-icing system 116 stops the heater elements 80 at 128. Activation of the mast de-icing system 116 may be used in parallel to trigger the activation of the blade de-icing system, if installed, to prevent ice accumulation on the blade 16 of the wind turbine 12. Again, operation of the de-icing system 116 prevents the wind turbine 12 from being shut down due to ice accumulation on the blades 16. In addition to facilitating de-icing of any blade, the airfoil performance monitor of the present invention can also be used to detect contamination or any type of environmental condition that leads to degradation of the performance of the airfoil, which, in the representative example described herein, would also translate to a degradation in the performance of the wind turbine. This information may be used to improve efficiencies, schedule maintenance, or for any other purpose deemed advantageous by the end user.

The invention has been described in an illustrative manner. The scope of protection sought is defined by the appended claims.

## Claims

1. An airfoil performance monitor (44) comprising:
a housing (50) mounted on a low-pressure face (52) of an airfoil (40), and including at least one pitot pressure orifice (74) used to determine the total pressure at the airfoil performance monitor (44) and at least one static pressure orifice (75) used to determine the static pressure at the airfoil performance monitor (44);
at least one airspeed-dependent sensor (78) that senses the total pressure at the airfoil performance monitor (44) via the pitot pressure orifice (74) and generates a digital airflow signal indicative of the dynamic pressure at the airfoil performance monitor (44) and
one or more inertial sensors (70) adapted to register, as frequency and amplitude data, mechanical motion during vibratory oscillations of the airfoil (40); and
a controller (72) adapted to derive a turbulence intensity ratio (R) by normalizing turbulence values using a steady-state airflow signal calculated from the digital airflow signal, and to filter the turbulence values from the digital airflow signal with the frequency and amplitude data from the one or more inertial sensors (70) to eliminate unwanted airfoil vibration effects on the turbulence intensity calculations.

2. The airfoil performance monitor (44) as claimed in claim 1, wherein the airspeed-dependent sensor (78) is a pressure sensor and said at least one pitot pressure orifice (74) is in fluid communication with an associated pressure sensor so as to measure the total pressure acting on said airfoil performance monitor (44).

3. The airfoil performance monitor (44) as claimed in claim 1 or 2, wherein the digital airflow signal has steady and overlaid turbulent components.

4. The airfoil performance monitor (44) as claimed in one of the preceding claims, wherein the controller (72) is configured to normalize a vibration signal into and perpendicular to a plane of a rotor (24) in response to a blade pitch angle input (36) from the one or more inertial sensors (70).

5. The airfoil performance monitor (44) as claimed in one of the preceding claims, wherein the controller (72) is configured to use a vibration amplitude from the one or more inertial sensors (70) as a feedback input to a rotor control system (23) to minimize vibration of a rotor (24) for the rotor control system (23).

6. The airfoil performance monitor (44) as claimed in one of the preceding claims, wherein the controller (72) is configured to calculate the turbulence intensity ratio (R) by dividing an alternating airflow component by a steady-state component.

7. The airfoil performance monitor (44) as claimed in one of the preceding claims, wherein the controller (72) is configured to use a threshold turbulence intensity ratio (R') to give an indication of a blade stall.

8. The airfoil performance monitor (44) as claimed in one of the preceding claims, wherein the controller (72) is configured to use a blade pitch angle (36) measured via the one or more inertial sensors (70) to scale the turbulence intensity ratio (R) to adjust a threshold turbulence intensity ratio (R') as a function of the blade pitch angle (36).

9. The airfoil performance monitor (44) as claimed in one of the preceding claims, wherein the controller (72) is configured to use the turbulence intensity ratio (R) as a feedback input to a rotor control system (23) to optimize an aerodynamic efficiency of a rotor (24) for the rotor control system (23).

10. The airfoil performance monitor (44) as claimed in one of the preceding claims, wherein the controller (72) is configured to filter the turbulence values using Fast Fourier Transform methods.

11. The airfoil performance monitor (44) as claimed in one of the preceding claims, wherein the controller (72) includes notch, band-pass, high pass, low-pass or low-pass parabolic filters to filter the turbulence values.

12. The airfoil performance monitor (44) as claimed in one of the preceding claims, wherein the one or more inertial sensors (70) include accelerometers that are configured to measure frequency and amplitude of acceleration on the housing (50) mounted on the low-pressure face of the airfoil (40).

13. The airfoil performance monitor (44) as claimed in one of the preceding claims, wherein the controller (72) is configured to use a threshold turbulence intensity ratio (R') to give an indication of a blade stall, and wherein the controller (72) is configured to use the threshold turbulence intensity ratio (R') as a feedback input to a blade pitch control system to optimize an aerodynamic efficiency of blades (16), and the efficiency of an overall rotor operation of a rotor control system.

14. The airfoil performance monitor (44) as claimed in claim 12, wherein the controller (72) is configured to use a frequency and amplitude of the acceleration as a feedback input to a blade pitch control system to minimize vibration of a rotor of a rotor control system.

15. A wind turbine (12) comprising:
one or more blades (16) that turn a shaft (28);
a generator (32) operatively connected to the shaft (28) that converts mechanical energy to electrical energy;
**characterized in that** the wind turbine (12) further comprises
an airfoil performance monitor (44) according to one of the preceding claims.

## Patentansprüche

1. Ein Monitor (44) zur Überwachung der Leistung eines Flügelprofils, umfassend:
ein Gehäuse (50), das an einer Niederdruckseite (52) eines Flügelprofils (40) angebracht ist und mindestens eine Staudrucköffnung (74), die zur Bestimmung des Gesamtdrucks an dem Monitor (44) zur Überwachung der Leistung eines Flügelprofils verwendet wird, und mindestens eine statische Drucköffnung (75), die zur Bestimmung des statischen Drucks an dem Monitor (44) zur Überwachung der Leistung eines Flügelprofils verwendet wird, enthält;
mindestens einen luftgeschwindigkeitsabhängigen Sensor (78), der den Gesamtdruck an dem Monitor (44) zur Überwachung der Leistung eines Flügelprofils mittels der Staudrucköffnung (74) erfasst und ein digitales Luftstromsignal erzeugt, das auf den dynamischen Druck an dem Monitor (44) zur Überwachung der Leistung eines Flügelprofils hinweist, und
einen oder mehrere Trägheitssensoren (70), die ausgebildet sind, eine mechanische Bewegung während der Schwingungsvibrationen des Flügelprofils (40) als Frequenz- und Amplitudendaten zu erfassen; und
eine Steuerung (72), die ausgebildet ist, ein Turbulenzintensitätsverhältnis (R) durch Normalisieren von Turbulenzwerten unter Verwendung eines aus dem digitalen Luftstromsignal berechneten Luftstromsignals in einem Gleichgewichtszustand abzuleiten und die Turbulenzwerte aus dem digitalen Luftstromsignal mit den Frequenz- und Amplitudendaten von dem einen oder den mehreren Trägheitssensoren (70) zu filtern, um unerwünschte Auswirkungen von Vibrationen des Flügelprofils auf die Berechnungen der Turbulenzintensität zu eliminieren.

2. Der Monitor (44) zur Überwachung der Leistung eines Flügelprofils nach Anspruch 1, wobei der luftgeschwindigkeitsabhängige Sensor (78) ein Drucksensor ist und die mindestens eine Staudrucköffnung (74) in Fluidverbindung mit einem zugeordneten Drucksensor steht, um den auf den Monitor (44) zur Überwachung der Leistung eines Flügelprofils wirkenden Gesamtdruck zu messen.

3. Der Monitor (44) zur Überwachung der Leistung eines Flügelprofils nach Anspruch 1 oder 2, wobei das digitale Luftstromsignal Gleichgewichts- und überlagerte Turbolenzkomponenten aufweist.

4. Der Monitor (44) zur Überwachung der Leistung eines Flügelprofils nach einem der vorhergehenden Ansprüche, wobei die Steuerung (72) ausgebildet ist, ein Vibrationssignal in und senkrecht zu einer Ebene eines Rotors (24) in Reaktion auf eine Rotorblattanstellwinkeleingabe (36) von dem einen oder den mehreren Trägheitssensoren (70) zu normalisieren.

5. Der Monitor (44) zur Überwachung der Leistung eines Flügelprofils nach einem der vorhergehenden Ansprüche, wobei die Steuerung (72) ausgebildet ist, eine Schwingungsamplitude von dem einen oder den mehreren Trägheitssensoren (70) als eine Rückführgröße an ein Rotorregelungssystem (23) zu verwenden, um für das Rotorregelungssystem (23) eine Schwingung eines Rotors (24) zu minimieren.

6. Der Monitor (44) zur Überwachung der Leistung eines Flügelprofils nach einem der vorhergehenden Ansprüche, wobei die Steuerung (72) ausgebildet ist, das Turbulenzintensitätsverhältnis (R) zu berechnen, indem er eine alternierende Luftstromkomponente durch eine Komponente in einem Gleichgewichtszustand dividiert.

7. Der Monitor (44) zur Überwachung der Leistung eines Flügelprofils nach einem der vorhergehenden Ansprüche, wobei die Steuerung (72) ausgebildet ist, ein Schwellenwert-Turbulenzintensitätsverhältnis (R') zu verwenden, um auf einen Strömungsabriss eines Rotorblatts hinzuweisen.

8. Der Monitor (44) zur Überwachung der Leistung eines Flügelprofils nach einem der vorhergehenden Ansprüche, wobei die Steuerung (72) ausgebildet ist, einen über den einen oder die mehreren Trägheitssensoren (70) gemessenen Rotorblattanstellwinkel (36) zu verwenden, um das Turbulenzintensitätsverhältnis (R) zu skalieren, um ein Schwellenwert-Turbulenzintensitätsverhältnis (R') als Funktion des Rotorblattanstellwinkels (36) einzustellen.

9. Der Monitor (44) zur Überwachung der Leistung eines Flügelprofils nach einem der vorhergehenden Ansprüche, wobei die Steuerung (72) ausgebildet ist, das Turbulenzintensitätsverhältnis (R) als eine Rückführgröße für ein Rotorregelungssystem (23) zu verwenden, um für das Rotorregelungssystem (23) einen aerodynamischen Wirkungsgrad eines Rotors (24) zu optimieren.

10. Der Monitor (44) zur Überwachung der Leistung eines Flügelprofils nach einem der vorhergehenden Ansprüche, wobei die Steuerung (72) ausgebildet ist, die Turbulenzwerte unter Verwendung von Fast-Fourier-Transformationsverfahren zu filtern.

11. Der Monitor (44) zur Überwachung der Leistung eines Flügelprofils nach einem der vorhergehenden Ansprüche, wobei die Steuerung (72) Kerb-, Bandpass-, Hochpass-, Tiefpass- oder parabolische Tiefpassfilter umfasst, um die Turbulenzwerte zu filtern.

12. Der Monitor (44) zur Überwachung der Leistung eines Flügelprofils nach einem der vorhergehenden Ansprüche, wobei der eine oder die mehreren Trägheitssensoren (70) Beschleunigungsmesser umfassen, die ausgebildet sind, eine Frequenz und Amplitude einer Beschleunigung an dem Gehäuse (50) zu messen, das an der Niederdruckseite des Flügelprofils (40) angebracht ist.

13. Der Monitor (44) zur Überwachung der Leistung eines Flügelprofils nach einem der vorhergehenden Ansprüche, wobei die Steuerung (72) ausgebildet ist, ein Schwellenwert-Turbulenzintensitätsverhältnis (R') zu verwenden, um auf einen Strömungsabriss eines Rotorblatts hinzuweisen, und wobei die Steuerung (72) ausgebildet ist, das Schwellenwert-Turbulenzintensitätsverhältnis (R') als eine Rückführgröße an ein Rotorblattanstellwinkelregelungssystem zu verwenden, um einen aerodynamischen Wirkungsgrad von Rotorblättern (16) und den Wirkungsgrad eines gesamten Rotorbetriebs eines Rotorregelungssystem zu optimieren.

14. Der Monitor (44) zur Überwachung der Leistung eines Flügelprofils nach Anspruch 12, wobei die Steuerung (72) ausgebildet ist, eine Frequenz und Amplitude der Beschleunigung als eine Rückführgröße für ein Rotorblattanstellwinkelregelungssystem zu verwenden, um eine Vibration eines Rotors eines Rotorregelungssystem zu minimieren.

15. Eine Windturbine (12), umfassend:
ein oder mehrere Rotorblätter (16), die eine Welle (28) drehen;
einen Generator (32), der mit der Welle (28) in Wirkverbindung steht und mechanische Energie in elektrische Energie umwandelt;
**dadurch gekennzeichnet, dass** die Windturbine (12) ferner umfasst
einen Monitor (44) zur Überwachung der Leistung eines Flügelprofils nach einem der vorhergehenden Ansprüche.

## Revendications

1. Un moniteur de performance de voilure (44) comprenant :
un boîtier (50) monté sur une face basse pression (52) d'une voilure (40), et comprenant au moins un orifice de pression de Pitot (74) utilisé pour déterminer la pression totale au niveau du moniteur de performances de voilure (44) et au moins un orifice de pression statique (75) utilisé pour déterminer la pression statique au niveau du moniteur de performances de voilure (44) ;
au moins un capteur dépendant de la vitesse d'air (78) qui détecte la pression totale au niveau du moniteur de performances de voilure (44) via l'orifice de pression de Pitot (74) et génère un signal numérique d'écoulement d'air indiquant la pression dynamique au niveau du moniteur de performances de voilure (44), et
un ou plusieurs capteurs inertiels (70) capables de détecter, sous forme de données de fréquence et d'amplitude, le mouvement mécanique au cours des oscillations vibratoires de la voilure (40) ; et
un contrôleur (72) adapté pour déduire un rapport d'intensité de turbulence (R) en normalisant des valeurs de turbulence à l'aide d'un signal d'écoulement d'air en régime permanent calculé sur la base du signal numérique d'écoulement d'air, et pour filtrer les valeurs de turbulence du signal numérique d'écoulement d'air avec les données de fréquence et d'amplitude provenant d'un ou de plusieurs capteurs inertiels (70) afin d'éliminer les effets indésirables des vibrations de la voilure sur les calculs de l'intensité de la turbulence.

2. Le moniteur de performances de voilure (44) selon la revendication 1, dans lequel le capteur dépendant de la vitesse d'air (78) est un capteur de pression et ledit au moins un orifice de pression de Pitot (74) est en communication fluidique avec un capteur de pression associé de manière à mesurer la pression totale agissant sur ledit moniteur de performances de voilure (44).

3. Le moniteur de performances de voilure (44) selon la revendication 1 ou 2, dans lequel le signal numérique d'écoulement d'air comporte des composantes stables et des composantes turbulentes superposées.

4. Le moniteur de performances de voilure (44) selon l'une des revendications précédentes, dans lequel le contrôleur (72) est configuré pour normaliser un signal de vibration dans et perpendiculairement à un plan d'un rotor (24) en réponse à une entrée d'angle de pas de pale (36) provenant d'un ou de plusieurs capteurs inertiels (70).

5. Le moniteur de performances de voilure (44) selon l'une des revendications précédentes, dans lequel le contrôleur (72) est configuré pour utiliser une amplitude de vibration provenant d'un ou de plusieurs capteurs inertiels (70) comme entrée de rétroaction à un système de régulation de rotor (23) pour minimiser la vibration d'un rotor (24) pour le système de régulation de rotor (23).

6. Le moniteur de performances de voilure (44) selon l'une des revendications précédentes, dans lequel le contrôleur (72) est configuré pour calculer le rapport d'intensité de turbulence (R) en divisant une composante d'écoulement d'air alternatif par une composante en régime permanent.

7. Le moniteur de performances de voilure (44) selon l'une des revendications précédentes, dans lequel le contrôleur (72) est configuré pour utiliser un rapport d'intensité de turbulence seuil (R') pour donner une indication d'un décrochage de pale.

8. Le moniteur de performances de voilure (44) selon l'une des revendications précédentes, dans lequel le contrôleur (72) est configuré pour utiliser un angle de calage des pales (36) mesuré par l'un ou les plusieurs capteurs inertiels (70) pour mettre à l'échelle le rapport d'intensité de turbulence (R) afin d'ajuster un rapport d'intensité de turbulence seuil (R') en fonction de l'angle de calage des pales (36).

9. Le moniteur de performances de voilure (44) selon l'une des revendications précédentes, dans lequel le contrôleur (72) est configuré pour utiliser le rapport d'intensité de turbulence (R) comme entrée de rétroaction à un système de régulation de rotor (23) pour optimiser l'efficacité aérodynamique d'un rotor (24) pour le système de régulation de rotor (23).

10. Le moniteur de performances de voilure (44) selon l'une des revendications précédentes, dans lequel le contrôleur (72) est configuré pour filtrer les valeurs de turbulence à l'aide de méthodes de transformée de Fourier rapide.

11. Le moniteur de performances de voilure (44) selon l'une des revendications précédentes, dans lequel le contrôleur (72) comprend des filtres coupe-bande, passe-bande, passe-haut, passe-bas ou passe-bas paraboliques pour filtrer les valeurs de turbulence.

12. Le moniteur de performances de voilure (44) selon l'une des revendications précédentes, dans lequel l'un ou les plusieurs capteurs inertiels (70) comprennent des accéléromètres configurés pour mesurer une fréquence et amplitude de l'accélération sur le boîtier (50) monté sur la face basse pression de la voilure (40).

13. Le moniteur de performances de voilure (44) selon l'une des revendications précédentes, dans lequel le contrôleur (72) est configuré pour utiliser un rapport d'intensité de turbulence seuil (R') pour donner une indication d'un décrochage de pale, et dans lequel le contrôleur (72) est configuré pour utiliser le rapport d'intensité de turbulence seuil (R') comme entrée de rétroaction à un système de régulation de pas de pale pour optimiser l'efficacité aérodynamique des pales (16), et l'efficacité d'un fonctionnement global du rotor d'un système de régulation de rotor.

14. Le moniteur de performances de voilure (44) selon la revendication 12, dans lequel le contrôleur (72) est configuré pour utiliser la fréquence et l'amplitude de l'accélération comme entrée de rétroaction au système de régulation du pas des pales afin de minimiser les vibrations d'un rotor d'un système de régulation de rotor.

15. Une éolienne (12) comprenant
une ou plusieurs pales (16) qui font tourner un arbre (28) ;
un générateur (32) relié en relation fonctionnelle à l'arbre (28), qui convertit énergie mécanique en énergie électrique ;
**caractérisée par le fait que** l'éolienne (12) comprend en outre
un moniteur de performances de voilure (44) selon l'une des revendications précédentes.
